Europäisches Patentamt

European Patent Office

Office européen des brevets

(19)

(11) EP 1 444 793 B1

(12) **EUROPEAN PATENT SPECIFICATION**

(45) Date of publication and mention
of the grant of the patent:
**01.03.2006 Bulletin 2006/09**

(21) Application number: **02777648.3**

(22) Date of filing: **24.10.2002**

(51) Int Cl.:
*H04B 7/06* (2006.01)  *H04B 7/08* (2006.01)

(86) International application number:
**PCT/IB2002/004445**

(87) International publication number:
**WO 2003/041299 (15.05.2003 Gazette 2003/20)**

(54) **METHOD OF SELECTING A SUBSET OF ANTENNAS AMONG A PLURALITY OF ANTENNAS IN A DIVERSITY SYSTEM**

VERFAHREN ZUR AUSWAHL EINER TEILMENGE VON MEHREREN ANTENNEN IN EINEM DIVERSITY SYSTEM

PROCEDE DE SELECTION D'UN SOUS-ENSEMBLE D'ANTENNES PARMI UNE PLURALITE D'ANTENNES DANS UN SYSTEME DE RECEPTION EN DIVERSITE

(84) Designated Contracting States:
**AT BE BG CH CY CZ DE DK EE ES FI FR GB GR
IE IT LI LU MC NL PT SE SK TR**

(30) Priority: **07.11.2001 EP 01204271**

(43) Date of publication of application:
**11.08.2004 Bulletin 2004/33**

(73) Proprietor: **Koninklijke Philips Electronics N.V.
5621 BA Eindhoven (NL)**

(72) Inventor: **GOROKHOV, Alexei
NL-5656 AA Eindhoven (NL)**

(74) Representative: **Slenders, Petrus J. W.
Philips
Intellectual Property and Standards
P.O. Box 220
5600 AE Eindhoven (NL)**

(56) References cited:
- **GORE D A ET AL: "Selecting an optimal set of transmit antennas for a low rank matrix channel" IEEE, XP010506585**
- **KONG N ET AL: "AVERAGE SNR OF A GENERALIZED DIVERSITY SELECTION COMBINING SCHEME" IEEE COMMUNICATIONS LETTERS, IEEE SERVICE CENTER, PISCATAWAY,US, US, vol. 3, no. 3, March 1999 (1999-03), pages 57-59, XP000824044 ISSN: 1089-7798**

**Description**

The invention relates to a method of selecting a subset of $N$ out of $\underline{N}$ antennas for receiving/transmitting $N$ signals.

The invention further relates to a receiver for receiving $N$ signals, the receiver comprising $\underline{N}$ receive antennas and $N$ receive chains, $\underline{N}$ being larger than $N$, to a transmitter for transmitting $M$ signals, the transmitter comprising $\underline{M}$ transmit antennas and $M$ transmit chains, $\underline{M}$ being larger than $M$, to a method of receiving $N$ signals by means of a receiver comprising $\underline{N}$ receive antennas and $N$ receive chains, $\underline{N}$ being larger than $N$, and to a method of transmitting $M$ signals by means of a transmitter comprising $\underline{M}$ transmit antennas and $M$ transmit chains, $\underline{M}$ being larger than $M$.

Such a method is known from the paper "Hybrid selection/optimum combining" by Jack H. Winters and Moe Z. Win, Proceedings Vehicular Technology Conference, Rhodes, May 2001. In modem transmission systems transmitters/receivers may be equipped with multiple transmit/receive antennas in order to efficiently communicate information. The number of physical transmit/receive antennas may be bigger than the number of available transmit/receive chains (e.g. the number of digital inputs/outputs). In such a case only a subset of the available transmit/receive antennas can be used simultaneously. This subset may be optimised subject to the channel between the transmitter and the receiver, i.e. according to channel information that may be available at the receiver and/or transmitter. From the above mentioned paper it is known that the use of more antennas than the actual transmit/receive chains, with adaptive selection of an active subset of antennas subject to channel information, can lead to a substantial increase in capacity of a wireless channel.

Another similar algorithm for selecting an optimal set of transmit antennas with limited feedback from the receiver is studied in XP10506585, "Selecting an optimal set of transmit antennas for a low rank matrix channel" by Dhananjay A. Gore, Rohit U Nabar and Arogyaswami Paulray.

The known method of selecting a subset of antennas is computationally inefficient. It involves an exhaustive search for the best subset, i.e. the subset that provides an optimal capacity (throughput) of the communication channel. The required number of computations for such a brute force approach increases exponentially with a linear increase in the number of antennas and becomes infeasible even for a moderate number of antennas.

It is an object of the invention to provide a method according to the preamble which is computationally efficient while still resulting in a substantially optimal subset, i.e. a subset providing a substantially optimal communication capacity. This object is achieved in the method according to the invention, said method comprising, starting from a hypothetical set of $\underline{N}$ antennas, removing ($\underline{N} - N$) times an antenna from the hypothetical set such that a capacity of the hypothetical set after removal of the antenna has a maximum value, the subset corresponding to the remaining hypothetical set of $N$ antennas. The invention is based upon the recognition that a substantial reduction of the computational complexity can be achieved by starting from a hypothetical set of $\underline{N}$ antennas and subsequently removing, one by one, ($\underline{N} - N$) antennas from the hypothetical set so that at every stage that antenna is removed the removal of which yields a minimum decrease of the communication capacity of the subset of antennas corresponding to the hypothetical set. It is noted that at each stage only a single antenna is removed. Starting from a hypothetical set of $\underline{N}$ antennas, ($\underline{N} - N$) antennas are subsequently removed until a hypothetical set of $N$ antennas remains. This remaining hypothetical set of $N$ antennas corresponds to the desired subset of $N$ antennas. This subset of $N$ antennas can thereafter be coupled to the $N$ available receive/transmit chains. Simulations have shown that this approach leads to selection of a subset that provides a communication capacity which is very close to the optimal communication capacity of the known method.

The above object and features of the present invention will be more apparent from the following description of the preferred embodiments with reference to the drawings, wherein:

Fig. 1 shows a block diagram of a transmission system 10 according to the invention,
Fig. 2 shows a flow diagram illustrating the method according to the invention,
Figs. 3 and 4 show some graphs illustrating the performance of the method according to the invention.

In the Figs., identical parts are provided with the same reference numbers.

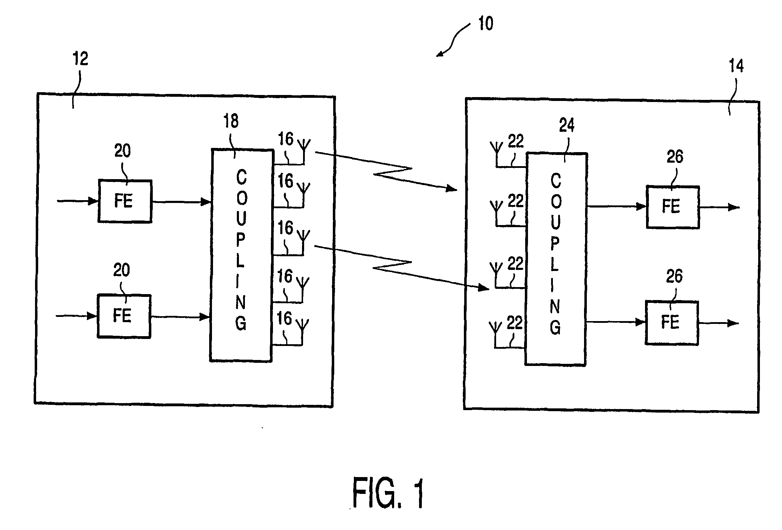

Fig. 1 shows a block diagram of a transmission system 10 according to the invention. The transmission system 10 comprises a transmitter 12 and a receiver 14. The transmission system 10 may comprise further transmitters 12 and receivers 14 (not shown). The transmitter 12 comprises a number $\underline{M}$ of transmit antennas 16 and a number $M$ of transmit chains 20. Fig. 1 illustrates merely an embodiment of a transmitter 12 in which $\underline{M}$ is equal to five and $M$ is equal to two. Other values for $\underline{M}$ and $M$ are possible as long as $\underline{M}$ is larger than $M$. The transmitter 12 further comprises coupling means 18 for selectively coupling the two transmit chains 20 to a subset of two out of the five transmit antennas 16. The coupling means 18 are arranged for selecting the subset of $M$ antennas 16 by, starting from a hypothetical set of $\underline{M}$ antennas, removing ($\underline{M} - M$) times an antenna from the hypothetical set such that a capacity of the hypothetical set after removal of the antenna has a maximum value. At the end, the desired subset corresponds to the remaining hypothetical set of $M$ antennas. Because of the coupling of the two transmit chains 20 to the two transmit antennas 16 the transmitter 12 is able to transmit two ($M$) signals via a (wireless) channel to the receiver 14. The transmit chains 20 each may comprise a conventional RF front end which may include a digital to analog converter, one or more amplifiers, one or more filters and a mixer.

The receiver 14 comprises a number $\underline{N}$ of receive antennas 22 and a number $N$ of receive chains 26. Fig. 1 illustrates merely an embodiment of a receiver 14 in which $\underline{N}$ is equal to four and $N$ is equal to two. Other values for $\underline{N}$ and $N$ are possible as long as $\underline{N}$ is larger than $N$. The receiver 14 further comprises coupling means 24 for selectively coupling the two receive chains 26 to a subset of two out of the four receive antennas 22. The coupling means 24 are arranged for selecting the subset of $N$ antennas 22 by, starting from a hypothetical set of $\underline{N}$ antennas, removing ($\underline{N}$ - $N$) times an antenna from the hypothetical set such that a capacity of the hypothetical set after removal of the antenna has a maximum value. At the end, the desired subset corresponds to the remaining hypothetical set of $N$ antennas. Because of the coupling of the two receive antennas 22 to the two receive chains 26 the receiver 14 is able to receive two ($N$) signals via the (wireless) channel from the transmitter 12. The receive chains 26 each may comprise a conventional RF front end which may include one or more amplifiers, one or more filters, a mixer and a analog to digital converter.

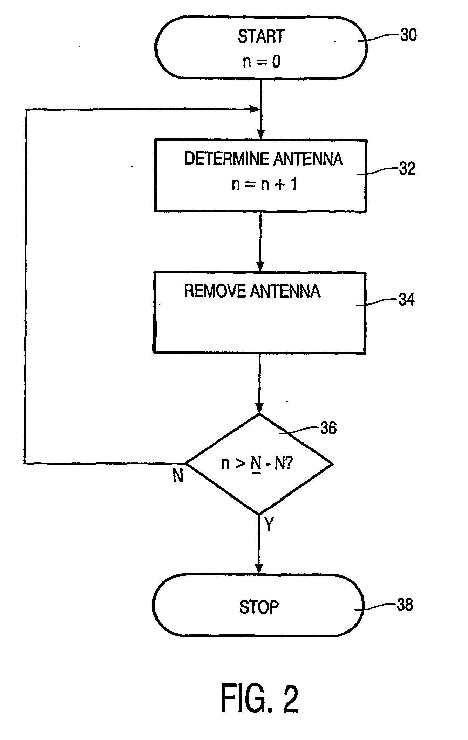

Fig. 2 shows a flow diagram illustrating the method of selecting a subset of $N$ out of $\underline{N}$ antennas for receiving/ transmitting $N$ signals according to the invention. The method comprises a number of steps 30, 32, 34, 36 and 38. In step 30 the method is started and variables are initalised. A variable or a set of variables representing a hypothetical set of antennas is initialised in such a way that the hypothetical set comprises $\underline{N}$ antennas. An auxiliary variable n is set to zero. This auxiliary variable n is used to control the number of times the steps 32 and 34 are executed.

Thereafter, in step 32 the antenna to be removed next from the hypothetical set of antennas is determined and the auxiliary variable n is incremented by one. The antenna to be removed next is that antenna for which a communication capacity (throughput) of the hypothetical set of antennas after removal of that antenna has a maximum value. The antenna to be removed next can for example be determined by calculating for each antenna in the hypothetical set of antennas the resulting capacity after removal of that antenna and by selecting the antenna or one of the antennas resulting in the highest capacity. Alternatively, the capacity reduction due to the removal of an antenna can be calculated for each antenna in the hypothetical set and the antenna the removal of which results in the smallest capacity reduction is selected.

Next, in step 34 the antenna that was determined in step 32 is removed from the (variable/variables representing the) hypothetical set of antennas.

Next, in step 36 it is determined whether the auxiliary variable $n$ is larger than ($\underline{N}$ - $N$). If so, the steps 32 and 34 have been executed ($\underline{N}$ - $N$) times and ($\underline{N}$ - $N$) antennas have been removed from the hypothetical set of antennas (which initially comprised $\underline{N}$ antennas) and the method continues with step 38. If not, at least one other antenna has to be determined and removed from the hypothetical set of antennas and therefore the steps 32 and 34 are executed once again.

In step 38 the method is finished and the variable/variables representing the remaining hypothetical set of antennas comprise $N$ antennas. The desired subset corresponds to this remaining hypothetical set of $N$ antennas.

The coupling means 18 enable switching any $M$ out of $\underline{M}$ transmit antennas to the available $M$ transmit chains 20. Similarly, the coupling means 24 enable switching any $N$ out of $\underline{N}$ receive antennas 22 to the available $N$ receive chains 26. Let us define $s[k] = (s_1[k],..., s_M[k])^T$ as a $M \times 1$ vector of signals supplied to the transmit chains 20, to be transmitted at a symbol interval $k \geq 0$ and $x[k] = (x_1[k], ..., x_N[k])^T$ as the corresponding $N \times 1$ vector of the received signals, where ($^T$) stands for the matrix transpose. First, we assume a non-selective noisy channel so that the relationship between $s[k]$ and $x[k]$ may be written as follows:

$$x[k] = \sqrt{E_s}\, \mathbf{H} s[k] + n[k] \tag{1}$$

where $E_s$ is the (average) signal energy per channel use contributing from any transmit antenna to any receive antenna, $n[k]$ is the $N \times 1$ vector of the ambient noise with average energy per antenna ($N_0/2$) per complex dimension and $\mathbf{H}$ is an $N \times M$ channel matrix

where the entry $\mathbf{H}_{q,p}$ specifies a complex-valued memoryless channel between the $p$-th transmit and the $q$-th receive chain. We assume an additive white Gaussian ambient noise so that $E\{n[k]\,n[k]^H\} = N_0\,\mathbf{I}_N$, where $E\{\cdot\}$ is the mathematical expectation, $\mathbf{I}_N$ is the $N \times N$ identity matrix and ($^H$) denotes the Hermitian conjugate.

The maximum throughput (capacity) of such a channel, measured in bits per channel use, is given by

$$C(\mathbf{H}) = \log_2 \det\left(\mathbf{I}_N + (E_s/N_0)\mathbf{H}\,\mathbf{H}^H\right) \tag{2}$$

where det($\cdot$) stands for the determinant. Generally, the objective of the antenna selection procedure is to select $M$ transmit (*N* receive) antennas out of the total available $\underline{M}$ transmit (*N* receive) antennas so that the throughput (2) is maximised. Define $\underline{\mathbf{H}}$ as a $\underline{N} \times \underline{M}$ matrix that describes a memoryless channel between $\underline{M}$ transmit and $\underline{N}$ receive antennas (assuming they are all equipped with appropriate transmit/receive chains). The antenna selection problem is now equivalent to the selection of a $N \times M$ sub-block $\mathbf{H}$ of the $\underline{N} \times \underline{M}$ matrix $\underline{H}$ that maximises equation (2). A brute force approach to this problem as suggested in the above mentioned paper is an exhaustive maximisation of equation (2) over all possible $N \times M$ sub-blocks of $\underline{H}$. This approach is, however, too burdensome when $\underline{M}$ and/or $\underline{N}$ is relatively big. In the following, a sub-optimal selection algorithm is described which is computationally efficient.

Assume first that a fixed subset of $M$ antennas is selected at the transmitter ($\underline{M} = M$ makes sense when the transmitter has no channel information) while a set of arbitrary $N$ receive antennas out of $\underline{N}$ available antennas may be adaptively selected at the receiver given the knowledge of an $\underline{N} \times M$ channel matrix $\underline{\mathbf{H}}$. The latter matrix is acquired during a channel estimation phase when all (subsets of) $\underline{N}$ receive antennas are successively connected to the $N$ available front-ends. In accordance with the principles of the present invention ($\underline{N}$ - $N$) receive antennas are subsequently removed so that at every stage one antenna is removed whichever yields a minimum decrease of the capacity according to equation (2). We next focus on the implementation of this idea.

Note that removing a single receive antenna is equivalent to suppressing a single row of the matrix $\underline{\mathbf{H}}$. Denote $\underline{\mathbf{H}}_p$ the $p$-th row of this matrix and $\underline{\widetilde{\mathbf{H}}}_p$ the $(\underline{N}$-1$) \times M$ matrix built of the remaining $(\underline{N}$-1$)$ rows of $\underline{\mathbf{H}}$. Owing to equation (2) and some simple algebra, the capacity corresponding of the channel $\underline{\widetilde{\mathbf{H}}}_p$ may be written as follows:

$$
\begin{aligned}
C\!\left(\underline{\widetilde{\mathbf{H}}}_p\right) &= \log_2 \det\!\left(\mathbf{I}_{N-1} + (E_s/N_0)\underline{\widetilde{\mathbf{H}}}_p\underline{\widetilde{\mathbf{H}}}_p^H\right) = \log_2 \det\!\left(\mathbf{I}_M + (E_s/N_0)\underline{\widetilde{\mathbf{H}}}_p^H\underline{\widetilde{\mathbf{H}}}_p\right) \\
&= \log_2 \det\!\left(\mathbf{I}_M + (E_s/N_0)\underline{\mathbf{H}}^H\underline{\mathbf{H}}\right) + \log_2\!\left(1 - (E_s/N_0)\underline{\mathbf{H}}_p\left(\mathbf{I}_M + (E_s/N_0)\underline{\mathbf{H}}^H\underline{\mathbf{H}}\right)^{-1}\underline{\mathbf{H}}_p^H\right) \\
&= C\!\left(\underline{\mathbf{H}}\right) + \log_2\!\left(1 - (E_s/N_0)\underline{\mathbf{H}}_p\left(\mathbf{I}_M + (E_s/N_0)\underline{\mathbf{H}}^H\underline{\mathbf{H}}\right)^{-1}\underline{\mathbf{H}}_p^H\right)
\end{aligned} \tag{3}
$$

Note that removing the $p$-th row results in a capacity reduction reflected by the second term in the right-hand side of equation (3). Hence, the optimal selection of ($\underline{N}$ - 1) receive antennas out of $\underline{N}$ yields $p$ that maximises (3) or, equivalently, that minimises

$$
\underline{\mathbf{H}}_p\left(\mathbf{I}_M + (E_s/N_0)\underline{\mathbf{H}}^H\underline{\mathbf{H}}\right)^{-1}\underline{\mathbf{H}}_p^H \tag{4}
$$

For the general case where $N < \underline{N}$ and $\underline{M} = M$, ($\underline{N}$ - $N$) antennas are subsequently eliminated so that at every stage, a single antenna is eliminated which yields a minimum decrease of the capacity in (3) or, equivalently, the minimum of (4). Note that $\underline{\mathbf{H}}$ should be replaced by its sub-matrix that excludes the rows corresponding to the removed receive antennas (e.g. at the second stage, $\underline{\mathbf{H}}$ is replaced by $\underline{\widetilde{\mathbf{H}}}_p$). To efficiently implement such a procedure, we need a computationally efficient update for the matrix inverse in (4). Such an update may be achieved due to a relationship involving a non-singular Hermitian matrix $\mathbf{A}$ and a vector $\mathbf{x}$ of the same dimension

$$
\left(\mathbf{A} - \mathbf{x}\mathbf{x}^H\right)^{-1} = \mathbf{A}^{-1} + \mathbf{A}^{-1}\mathbf{x}\left(1 - \mathbf{x}^H\mathbf{A}^{-1}\mathbf{x}\right)^{-1}\mathbf{x}^H\mathbf{A}^{-1} \tag{5}
$$

where $\mathbf{A}$ stands for the matrix inverse exploited at the previous stage and $\mathbf{x}$ is $\sqrt{E_s/N_0}$ times the transposed row of the channel matrix removed at the previous stage. A pseudo language description of an algorithm for selecting $N$ receive antennas out of $\underline{N}$ is given below:

Set $\mathbf{H} \leftarrow \underline{\mathbf{H}}$, i $\leftarrow$ (1,...,$\underline{N}$) and compute $\mathbf{B} = (\mathbf{I}_N + (E_s/N_0)\mathbf{H}^H\mathbf{H})^{-1}$.
For $n$=1 to ($\underline{N}$ - $N$)

Begin

Find $\hat{p}$ such that $\mathbf{H}_{\hat{p}}\mathbf{B}\,\mathbf{H}_{\hat{p}}^{H} \;\leq\; \mathbf{H}_{p}\mathbf{B}\,\mathbf{H}_{p}^{H}\,,\ 1\leq p\leq\left(\underline{N}-n+1\right);$

Update $\mathbf{i} \leftarrow \left(\mathbf{i}_{1},\ldots,\mathbf{i}_{\hat{p}-1},\mathbf{i}_{\hat{p}+1},\ldots,\mathbf{i}_{N-n+1}\right);$

If $n<\left(\underline{N}-N\right)$

Begin

$$\text{Update}\ \ \boldsymbol{B}\ \leftarrow\ \boldsymbol{B}\ +\ \boldsymbol{B}\,\boldsymbol{H}_{\hat{p}}^{H}\left(\left(E_{s}/N_{0}\right)^{-1}\ -\ \boldsymbol{H}_{\hat{p}}\boldsymbol{B}\,\boldsymbol{H}_{\hat{p}}^{H}\ \right)^{-1}\boldsymbol{H}_{\hat{p}}\boldsymbol{B},$$

$$\boldsymbol{H}\ \leftarrow\ \left(\mathbf{H}_{1}^{T},\ldots,\mathbf{H}_{\hat{p}-1}^{T},\mathbf{H}_{\hat{p}+1}^{T},\ldots,\mathbf{H}_{N-n+1}^{T}\right)^{T}\ ;$$

End

End

First, the channel matrix **H** and the vector **i** are initialised: **H** is made equal to $\underline{N}\times M$ channel matrix $\underline{\mathbf{H}}$ and **i** is made equal to an $1\times\underline{N}$ vector containing the indices of all $\underline{N}$ antennas. The vector **i** represents the hypothetical set of antennas (which initially comprises $\underline{N}$ antennas). Furthermore, during initialisation the auxiliary variable **B** (which is the middle part of expression (4)) is computed. The computed value of this variable will be used during the calculation of the communication capacity during the first iteration of the algorithm.

Next, the algorithm performs ($\underline{N}$ - N) iterations and at each iteration first the antenna to be removed next (i.e. $\hat{p}$) is determined and thereafter the antenna is removed from the hypothetical set of antennas by removing the corresponding antenna index $\mathbf{i}_{\hat{p}}$ from vector **i**. $\hat{p}$ is determined by calculating the throughput/capacity reduction expression (4) for all remaining antennas $p$ in the hypothetical set of antennas (by using the pre-calculated value of **B**). $\hat{p}$ corresponds to the antenna (or one of the antennas) the removal of which results in the smallest throughput/capacity reduction (in other words: the removal of which results in the highest remaining throughput/capacity).

It is noted that it is also possible to compute the capacity/throughput of the remaining hypothetical set after removal of each individual antenna in each iteration for all antennas in the hypothetical set. However, it is less complex and computationally more efficient to calculate the capacity/throughput differences instead of the actual capacities.

The channel matrix **H** and the auxiliary variable **B** are updated at each iteration of the algorithm (except for the last iteration) to prepare for the next iteration. The update of the channel matrix **H** involves the exclusion of the row corresponding to the just removed antenna $\hat{p}$.

Finally, after completion of the algorithm the resulting $1\times N$ vector **i** contains the indices of the selected receive antennas.

It is easy to see that this algorithm may also be applied to select transmit antennas (i.e. the case where $N=\underline{N}$ and $\underline{M}>M$). To this end, we note that the channel capacity expression (3) is invariant with respect to Hermitian conjugation of the channel matrix, see the first row in (3). Hence the above presented algorithm may readily be exploited, after replacing the initialisation $\mathbf{H}\leftarrow\underline{\mathbf{H}}$ by $\mathbf{H}\leftarrow\underline{\mathbf{H}}^{H}$, $\mathbf{I}_{M}$ by $\mathbf{I}_{N}$, $N$ by $M$ and $\underline{N}$ by $\underline{M}$. A pseudo language description of the resulting modified algorithm for selecting $M$ transmit antennas out of $\underline{M}$ is given below:

Set $\mathbf{H}\leftarrow\underline{\mathbf{H}}^{H}$, $\mathbf{i}\leftarrow(1,\ldots,\underline{M})$ and compute $\mathbf{B}=(\mathbf{I}_{N}+(E_{s}/N_{o})\mathbf{H}^{H}\mathbf{H})^{-1}$.
For $n=1$ to ($\underline{M}$ - M)

Begin

$$\text{Find } \hat{p} \text{ such that } \mathbf{H}_{\hat{p}} \mathbf{B} \mathbf{H}_{\hat{p}}^{H} \;\leq\; \mathbf{H}_{p} \mathbf{B} \mathbf{H}_{p}^{H}, \, 1 \leq p \leq (\underline{M} - n + 1);$$

$$\text{Update } \mathbf{i} \leftarrow \left(\mathbf{i}_1, \ldots, \mathbf{i}_{\hat{p}-1}, \mathbf{i}_{\hat{p}+1}, \ldots, \mathbf{i}_{M-n+1}\right);$$

$$\text{If } n < (\underline{M} - M)$$

Begin

$$\text{Update } \mathbf{B} \;\leftarrow\; \mathbf{B} \;+\; \mathbf{B} \mathbf{H}_{\hat{p}}^{H} \left((E_s / N_0)^{-1} - \mathbf{H}_{\hat{p}} \mathbf{B} \mathbf{H}_{\hat{p}}^{H}\right)^{-1} \mathbf{H}_{\hat{p}} \mathbf{B},$$

$$\mathbf{H} \;\leftarrow\; \left(\mathbf{H}_1^T, \ldots, \mathbf{H}_{\hat{p}-1}^T, \mathbf{H}_{\hat{p}+1}^T, \ldots, \mathbf{H}_{M-n+1}^T\right)^T;$$

End

End

Note that channel knowledge at the transmitter 12 is mandatory for transmit antenna selection. This knowledge may be supplied in different ways. One possibility is to use a feedback link from the receiver 14 to the transmitter 12. The receiver 14 makes use of this feedback link to communicate the acquired channel parameters to the transmitter 12. Another option may be available in the time division duplex (TDD) mode wherein the same carrier frequency is used for both forward and reverse link. In such a case, each site acquires parameters of the propagation channel between the sites during its reception phase. Due to the reciprocity of electromagnetic wave propagation, the channel parameters acquired during the reception phase may be considered identical to the channel parameters required to accomplish antenna selection for the subsequent transmission phase. A suitable way to supply the transmitter 12 with the channel knowledge depends on system requirements and the type of time-frequency resources allocation.

The algorithms presented above are valid for memoryless channels. Below, similar algorithms for frequency selective channels will be developed. Frequency selectivity of wireless communication channels is usually due to multi-path propagation that results in inter-symbol interference. Often, the propagation delay spread appears to be a moderate multiple of the symbol rate. Such channels may be accurately approximated by finite impulse response (FIR) linear filter with a moderate number of taps. In these cases, the memoryless channel model (1) extends as follows:

$$x[k] \;=\; \sqrt{E_s} \sum_{l=0}^{L} \mathbf{H}[l] s[k-l] + n[k], \tag{6}$$

where the set of $N \times M$ matrices $\mathbf{H}[0], \ldots, \mathbf{H}[L]$ specifies the (approximate) finite causal channel impulse response. The capacity of a frequency selective channel is given by

$$
\begin{aligned}
C(\mathbf{H}) \;&=\; \int_0^1 \log_2 \det\left(\mathbf{I}_N + (E_s / N_0)\, \mathbf{H}(e^{i2\pi f})\, \mathbf{H}(e^{i2\pi f})^{H}\right) df \\
&=\; \int_0^1 \log_2 \det\left(\mathbf{I}_M + (E_s / N_0)\, \mathbf{H}(e^{i2\pi f})^{H}\, \mathbf{H}(e^{i2\pi f})\right) df
\end{aligned} \tag{7}
$$

where $\mathbf{H}(e^{i2\pi f}) = \Sigma_l \mathbf{H}[l] e^{-i2\pi fl}$ is the channel frequency response. Again we assume that a fixed subset of $M$ antennas is selected at the transmitter while a set of arbitrary $N$ receive antennas out of $\underline{N}$ available antennas may be adaptively selected at the receiver given the knowledge of an $\underline{N} \times M$ matrix channel response $\underline{\mathbf{H}}[0], \ldots, \underline{\mathbf{H}}[L]$. Clearly, the direct computation of (7) is too burdensome even for a small number of transmit and receive antennas. The exact criterion (7) may be simplified based on two observations.

First of all, the expression (7) may be rewritten, according to Wiener-Masani theorem, as follows:

$$C(\mathbf{H}) \;=\; \log_2 \det(\mathbf{D}), \tag{8}$$

where $\mathbf{D}$ is the $M \times M$ innovation covariance matrix resulting from the causal minimum phase spectral factorization of a positive definite spectral density matrix-function

$$\left(\mathbf{I}_M + (E_s/N_0)\,\mathbf{H}\!\left(e^{i2\pi f}\right)^{H} \mathbf{H}\!\left(e^{i2\pi f}\right)\right),\; f \in (0,1).$$

Second, we note that

$$
\left(\mathbf{I}_M + (E_s/N_0)\,\mathbf{H}\!\left(e^{i2\pi f}\right)^{H} \mathbf{H}\!\left(e^{i2\pi f}\right)\right) =
$$
$$
\left(\mathbf{I}_M + (E_s/N_0)\sum_{l=0}^{L}\mathbf{H}[l]^{H}\mathbf{H}[l]\right) + (E_s/N_0)\sum_{|k|=1}^{L} e^{i2\pi f k}\left(\sum_{l=\max\{0,-k\}}^{\min\{L,L-k\}}\mathbf{H}[l+k]^{H}\mathbf{H}[l]\right). \tag{9}
$$

Note that the first term in the right-hand side of (9) involves auto-correlations of the channel impulse response whereas the remaining terms involve cross-correlations only. Given a substantial decorrelation between the coefficients corresponding to different delay taps, the first term will dominate the other terms. Based on this observation, we suggest an approximation

$$C(\mathbf{H}) \;\approx\; \log_2 \det\!\left(\mathbf{I}_M + (E_s/N_0)\sum_{l=0}^{L}\mathbf{H}[l]^{H}\mathbf{H}[l]\right). \tag{10}$$

Later we will make use of the following notations:

$$
\mathbf{H} \;=\; \left[\mathbf{H}_{1,:}[0]^{T},\ldots,\mathbf{H}_{1,:}[L]^{T},\ldots,\mathbf{H}_{N,:}[0]^{T},\ldots,\mathbf{H}_{N,:}[L]^{T}\right]^{T},
$$
$$
\underline{\mathbf{H}} \;=\; \left[\underline{\mathbf{H}}_{1,:}[0]^{T},\ldots,\underline{\mathbf{H}}_{1,:}[L]^{T},\ldots,\underline{\mathbf{H}}_{N,:}[0]^{T},\ldots,\underline{\mathbf{H}}_{N,:}[L]^{T}\right]^{T}. \tag{11}
$$

The approximation (9) yields:

$$C(\mathbf{H}) \;\approx\; \log_2 \det\!\left(\mathbf{I}_M + (E_s/N_0)\sum_{l=0}^{L}\mathbf{H}^{H}\mathbf{H}\right),$$

$$C(\underline{\mathbf{H}}) \;\approx\; \log_2 \det\!\left(\mathbf{I}_M + (E_s/N_0)\sum_{l=0}^{L}\underline{\mathbf{H}}^{H}\underline{\mathbf{H}}\right). \tag{12}$$

The latter expressions are similar to expressions for throughput presented earlier for a memoryless channel (flat fading). The difference lies in the fact that the consecutive $(L+1) \times M$ blocks of the $N(L+1) \times M$ matrix $\mathbf{H}$((L+1) $\times$ $M$ blocks of the $\underline{N(L}+1) \times M$ matrix $\underline{\mathbf{H}}$) correspond to the different taps of the same receive antenna. Hence, removing a single antenna implies removing the corresponding $(L+1) \times M$ block rather than a single row, as in case of a memoryless channel. Therefore, we need the corresponding extensions of expressions (3) and (5). Based on these extensions an extended version (i.e. for frequency selective channels) of the earlier mentioned algorithm for selecting $N$ receive antennas out of $\underline{N}$ can be derived, a pseudo language description of which is presented below:

Set $\mathbf{H} \leftarrow \underline{\mathbf{H}}$, $\mathbf{i} \leftarrow (1,...,\underline{N})$ and compute $\mathbf{B} = (\mathbf{I}_M + (E_s/N_0)\mathbf{H}^H\mathbf{H})^{-1}$.

For $n$=1 to $(\underline{N} - N)$

$$\text{For } n = 1 \text{ to } (\underline{N} - N)$$

$$\text{Begin}$$

$$\text{Find } \hat{p} \text{ such that}$$

$$\det\left(\mathbf{I}_{L+1} - (E_s/N_0)\mathbf{H}_{\hat{p}}^H \mathbf{B} \, \mathbf{H}_{\hat{p}}\right) \geq \det\left(\mathbf{I}_{L+1} - (E_s/N_0)\mathbf{H}_{p}^H \mathbf{B} \, \mathbf{H}_{p}\right),$$

$$1 \leq p \leq (\underline{N} - n + 1);$$

$$\text{Update } \mathbf{i} \leftarrow \left(\mathbf{i}_1, \dots, \mathbf{i}_{\hat{p}-1}, \mathbf{i}_{\hat{p}+1}, \dots, \mathbf{i}_{N-n+1}\right);$$

$$\text{If } n < (\underline{N} - N)$$

$$\text{Begin}$$

$$\text{Update } \mathbf{B} \leftarrow \mathbf{B} + \mathbf{B} \, \mathbf{H}_{\hat{p}}^H \left((E_s/N_0)^{-1}\mathbf{I}_{L+1} - \mathbf{H}_{\hat{p}} \mathbf{B} \, \mathbf{H}_{\hat{p}}^H \right)^{-1} \mathbf{H}_{\hat{p}} \mathbf{B},$$

$$\mathbf{H} \leftarrow \left(\mathbf{H}_1^T, \dots, \mathbf{H}_{\hat{p}-1}^T, \mathbf{H}_{\hat{p}+1}^T, \dots, \mathbf{H}_{N-n+1}^T\right)^T \,;$$

$$\text{End}$$

$$\text{End}$$

In this algorithm, $\mathbf{H}_p$ denotes the $(L+1) \times M$ block that spans rows $(p$-1$)(L$+1$)$+1 through $p(L$+1$)$ of $\mathbf{H}$. Note that the complexity of this algorithm grows significantly along with the number $(L$+1$)$ of taps. Indeed, every stage of the algorithm computes $(\underline{N} - n$+1$)$ determinants and one inverse of size $(L$+1$) \times (L$+1$)$. It is possible to take into account only a few significant taps of the channel impulse response for the antenna selection so as to keep L small.

This algorithm can be adapted to select transmit antennas ($N = \underline{N}$ and $\underline{M} > M$). Once again, we exploit the invariance of the channel capacity with respect to the Hermitian conjugation of the channel matrix. It is only needed to modify the definitions (11) as follows:

$$\mathbf{H} = \left[\mathbf{H}_{:,1}[0], \dots, \mathbf{H}_{:,1}[L], \dots, \mathbf{H}_{:,M}[0], \dots, \mathbf{H}_{:,M}[L]\right]^H,$$

$$\underline{\mathbf{H}} = \left[\underline{\mathbf{H}}_{:,1}[0], \dots, \underline{\mathbf{H}}_{:,1}[L], \dots, \underline{\mathbf{H}}_{:,M}[0], \dots, \underline{\mathbf{H}}_{:,M}[L]\right]^H. \tag{13}$$

A pseudo language description of the resulting modified algorithm for selecting $M$ transmit antennas out of $\underline{M}$ under frequency selective channel conditions is given below:

Set $\mathbf{H} \leftarrow \underline{\mathbf{H}}$, $\mathbf{i} \leftarrow (1,...,\underline{M})$ and compute $\mathbf{B} = (\mathbf{I}_N + (E_s/N_0)\mathbf{H}^H\mathbf{H})^{-1}$.

For $n = 1$ to $(\underline{M} - M)$

Begin

Find $\hat{p}$ such that

$$\det\!\left(\mathbf{I}_{L+1} - (E_s/N_0)\mathbf{H}_{\hat{p}}^{H}\mathbf{B}\,\mathbf{H}_{\hat{p}}\right) \;\geq\; \det\!\left(\mathbf{I}_{L+1} - (E_s/N_0)\mathbf{H}_{p}^{H}\mathbf{B}\,\mathbf{H}_{p}\right),$$

$$1 \leq p \leq (\underline{M} - n + 1);$$

Update $\mathbf{i} \leftarrow \left(\mathbf{i}_1, \ldots, \mathbf{i}_{\hat{p}-1}, \mathbf{i}_{\hat{p}+1}, \ldots, \mathbf{i}_{M-n+1}\right);$

If $n < (\underline{M} - M)$

Begin

Update $\mathbf{B} \;\leftarrow\; \mathbf{B} + \mathbf{B}\,\mathbf{H}_{\hat{p}}^{H}\left((E_s/N_0)^{-1}\mathbf{I}_{L+1} - \mathbf{H}_{\hat{p}}\mathbf{B}\,\mathbf{H}_{\hat{p}}^{H}\right)^{-1}\mathbf{H}_{\hat{p}}\mathbf{B},$

$$\mathbf{H} \;\leftarrow\; \left(\mathbf{H}_1^{T}, \ldots, \mathbf{H}_{\hat{p}-1}^{T}, \mathbf{H}_{\hat{p}+1}^{T}, \ldots, \mathbf{H}_{M-n+1}^{T}\right)^{T};$$

End

End

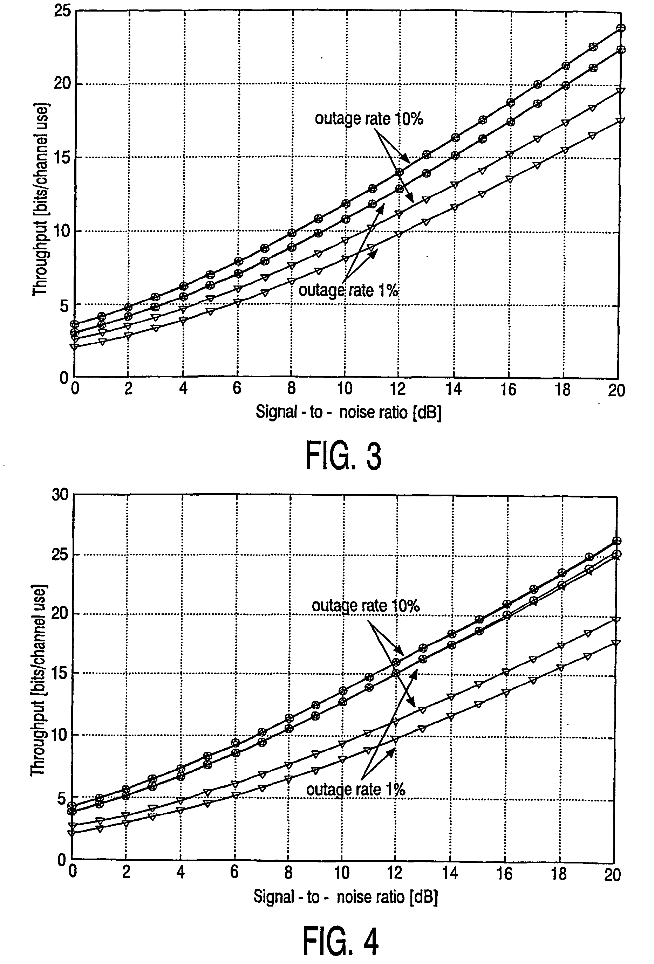

Figs. 3 and 4 show some graphs illustrating the performance of the method according to the invention. Consider a scenarion where the transmitter 12 makes use of $\underline{M}$ = 4 transmit antennas 16, each transmit antenna 16 being coupled to a transmit chain 20, (i.e. $\underline{M}$ = M) while the receiver 14 has N = 4 receive chains 16 whereas the number of receive antennas 22 is $\underline{N}$ = 8 (Fig. 3) and $\underline{N}$ =16 (Fig. 4). Let's assume a Rayleigh flat fading channel and fully uncorrelated transmit/receive antennas. In other words, the entries of the channel matrix $\underline{\mathbf{H}}$ are modelled as independent identically distributed zero mean circular complex Gaussian variables with variance (1/2) per complex dimension. For the subsets resulting from various selection methods the outage capacities for outage rates 10% and 1% have been obtained via 10000 independent simulation trials and the resulting graphs are shown in Figs. 3 and 4. Solid lines with circles show the outage capacities for the optimal subset which results from the prior-art exhaustive search approach. Note that such an exhaustive search requires computing $\binom{\underline{N}}{N}$ determinants of $M \times M$ matrices which amounts to 1820 determinants of $4 \times 4$ matrices when $\underline{M}$ = M = 4, N = 4 and $\underline{N}$ = 16. Solid lines with stars reflect the outage capacities of the subset determined by means of the first algorithm presented above (i.e. for selecting N receive antennas out of $\underline{N}$ under flat fading conditions). The complexity of this procedure is dominated by the computations of $(2\underline{M} - M + 1)(\underline{M} - M)/2$ quadratic forms defined by $M \times M$ matrices. In the above example, the number of quadratic forms is 174. For benchmarking purposes the performance of a randomly chosen subset of N = 4 antennas is represented by a solid line with triangles. It can be seen that the method according to the invention yields a negligible loss as compared to the optimal selection. Alternatively, the gain over the random selection varies according to the desired outage rate and approaches 50% at low and moderate SNR.

The scope of the invention is not limited to the embodiments explicitly disclosed. The invention is embodied in each new characteristic and each combination of characteristics. Any reference signs do not limit the scope of the claims. The word "comprising" does not exclude the presence of other elements or steps than those listed in a claim. Use of the word "a" or "an" preceding an element does not exclude the presence of a plurality of such elements.

## Claims

1. A method of selecting a subset of N out of $\underline{N}$ antennas for receiving/transmitting N signals by, starting from a hypothetical set of $\underline{N}$ antennas, subsequently removing $(\underline{N} - N)$ times an antenna from the hypothetical set such that the antenna to be removed each time is the one for which a capacity of the hypothetical set of antennas after the removal of that antenna has a maximum value, the subset corresponding to the remaining hypothetical set of N antennas.

2. A receiver (14) for receiving $N$ signals, the receiver (14) comprising $\underline{N}$ receive antennas (22) and $N$ receive chains (26), $\underline{N}$ being larger than $N$, the receiver (14) further comprising coupling means (24) for selectively coupling the N receive chains (26) to a subset of $N$ out of the $\underline{N}$ antennas (22), the coupling means (24) being arranged for selecting the subset of $N$ antennas (22) by, starting from a hypothetical set of $\underline{N}$ antennas, subsequently removing ($\underline{N}$ - $N$) times an antenna from the hypothetical set such that the antenna to be removed each time is the one for which a capacity of the hypothetical set of antennas after the removal of that antenna has a maximum value, the subset corresponding to the remaining hypothetical set of $N$ antennas.

3. A transmitter (12) for transmitting $M$ signals, the transmitter (12) comprising $\underline{M}$ transmit antennas (16) and $M$ transmit chains (20), $\underline{M}$ being larger than $M$, the transmitter (12) further comprising coupling means (18) for selectively coupling the $M$ transmit chains (20) to a subset of $M$ out of the $\underline{M}$ antennas (16), the coupling means (18) being arranged for selecting the subset of $M$ antennas (16) by, starting from a hypothetical set of $\underline{M}$ antennas, subsequently removing ($\underline{M}$ - $M$) times an antenna from the hypothetical set such that the antenna to be removed each time is the one for which a capacity of the hypothetical set of antennas after the removal of that antenna has a maximum value, the subset corresponding to the remaining hypothetical set of $M$ antennas.

4. A transmission system (10) comprising a receiver (14) according to claim 2 and/or a transmitter (12) according to claim 3.

5. A method of receiving $N$ signals by means of a receiver (14) comprising $\underline{N}$ receive antennas (22) and $N$ receive chains (26), $\underline{N}$ being larger than $N$, the method comprising:

   - selecting a subset of $N$ out of the $\underline{N}$ antennas (22) by, starting from a hypothetical set of $\underline{N}$ antennas, subsequently removing ($\underline{N}$ - $N$) times an antenna from the hypothetical set such that the antenna to be removed each time is the one for which a capacity of the hypothetical set of antennas after the removal of that antenna has a maximum value, wherein the subset corresponds to the remaining hypothetical set of $N$ antennas,
   - coupling the $N$ receive chains (26) to the subset of $N$ antennas (22).

6. A method of transmitting $M$ signals by means of a transmitter (12) comprising $\underline{M}$ transmit antennas (16) and $M$ transmit chains (20), $\underline{M}$ being larger than $M$, the method comprising

   - selecting a subset of $M$ out of the $\underline{M}$ antennas (16) by, starting from a hypothetical set of $\underline{M}$ antennas, subsequently removing ($\underline{M}$ - $M$) times an antenna from the hypothetical set such that the antenna to be removed each time is the one for which a capacity of the hypothetical set of antennas after the removal of that antenna has a maximum value, wherein the subset corresponds to the remaining hypothetical set of $M$ antennas,
   - coupling the $M$ transmit chains (20) to the subset of $M$ antennas (16).

**Patentansprüche**

1. Verfahren zur Auswahl einer Teilmenge von $N$ aus $\underline{N}$ Antennen zum Empfangen/Senden von $N$ Signalen indem, ausgehend von einer hypothetischen Menge von $\underline{N}$ Antennen, nacheinander ($\underline{N}$ - $N$)-mal eine Antenne dergestalt aus der hypothetischen Menge entfernt wird, dass die zu entfernende Antenne jedes Mal diejenige Antenne ist, für die eine Kapazität der hypothetischen Menge von Antennen nach dem Entfernen dieser Antenne einen Maximalwert aufweist, wobei die Teilmenge der verbleibenden hypothetischen Menge von $N$ Antennen entspricht.

2. Empfänger (14) zum Empfangen von $N$ Signalen, der $\underline{N}$ Empfangsantennen (22) und $N$ Empfangsketten (26) umfasst, wobei $\underline{N}$ größer als $N$ ist, und der weiterhin Koppelmittel (24) zum selektiven Koppeln der $N$ Empfangsketten (26) an eine Teilmenge von $N$ aus $\underline{N}$ Antennen (22) umfasst, wobei die Koppelmittel (24) die Teilmenge von $N$ Antennen (22) auswählen, indem, ausgehend von einer hypothetischen Menge von $\underline{N}$ Antennen, nacheinander ($\underline{N}$ - $N$)-mal eine Antenne dergestalt aus der hypothetischen Menge entfernt wird, dass die zu entfernende Antenne jedes Mal diejenige Antenne ist, für die eine Kapazität der hypothetischen Menge von Antennen nach dem Entfernen dieser Antenne einen Maximalwert aufweist, wobei die Teilmenge der verbleibenden hypothetischen Menge von $N$ Antennen entspricht.

3. Sender (12) zum Senden von $M$ Signalen, der $\underline{M}$ Sendeantennen (16) und $M$ Sendeketten (20) umfasst, wobei $\underline{M}$ größer als $M$ ist, und der weiterhin Koppelmittel (18) zum selektiven Koppeln der $M$ Sendeketten (20) an eine Teilmenge von $M$ aus den $\underline{M}$ Antennen (16) umfasst, wobei die Koppelmittel (18) die Teilmenge von $M$ Antennen (16) auswählen, indem, ausgehend von einer hypothetischen Menge von $M$ Antennen, nacheinander ($M$ - $M$)-mal eine Antenne dergestalt aus der hypothetischen Menge entfernt wird, dass die zu entfernende Antenne jedes Mal diejenige Antenne ist, für die eine Kapazität der hypothetischen Menge von Antennen nach dem Entfernen dieser Antenne einen Maximalwert aufweist, wobei die Teilmenge der verbleibenden hypothetischen Menge von MAntennen entspricht.

4. Übertragungssystem (10), das einen Empfänger (14) nach Anspruch 2 und/oder einen Sender (12) nach Anspruch 3 umfasst.

5. Verfahren zum Empfangen von $N$ Signalen mittels eines Empfängers (14), der $\underline{N}$ Empfangsantennen (22) und $N$ Empfangsketten (26) umfasst, wobei $\underline{N}$ größer als $N$ ist, wobei das Verfahren Folgendes umfasst:

   - Auswählen einer Teilmenge von $N$ aus den $\underline{N}$ Antennen (22) indem, ausgehend von einer hypothetischen Menge von $\underline{N}$ Antennen, nacheinander ($\underline{N}$ - $N$)-mal eine Antenne dergestalt aus der hypothetischen Menge entfernt wird, dass die zu entfernende Antenne jedes Mal diejenige Antenne ist, für die eine Kapazität der hypothetischen Menge von Antennen nach dem Entfernen dieser Antenne einen Maximalwert aufweist, wobei die Teilmenge der verbleibenden hypothetischen Menge von $N$ Antennen entspricht,
   - Koppeln der $N$ Empfangsketten (26) an die Teilmenge von $N$ Antennen (22).

6. Verfahren zum Senden von $M$ Signalen mittels eines Empfängers (12), der $\underline{M}$ Sendeantennen (16) und $M$ Sendeketten (20) umfasst, wobei $\underline{M}$ größer als $M$ ist, wobei das Verfahren Folgendes umfasst:

   - Auswählen einer Teilmenge von $M$ aus den $\underline{M}$ Antennen (16) indem, ausgehend von einer hypothetischen Menge von $\underline{M}$ Antennen, nacheinander ($\underline{M}$ - $M$)-mal eine Antenne dergestalt aus der hypothetischen Menge entfernt wird, dass die zu entfernende Antenne jedes Mal diejenige Antenne ist, für die eine Kapazität der hypothetischen Menge von Antennen nach dem Entfernen dieser Antenne einen Maximalwert aufweist, wobei die Teilmenge der verbleibenden hypothetischen Menge von MAntennen entspricht,
   - Koppeln der $M$ Sendeketten (20) an die Teilmenge von $M$ Antennen (16).

## Revendications

1. Procédé de sélection d'un sous-ensemble de $N$ parmi $\underline{N}$ antennes pour recevoir/émettre $N$ signaux en éliminant successivement ($\underline{N}$ - $N$) fois, en partant d'un ensemble hypothétique de $\underline{N}$ antennes, une antenne de l'ensemble hypothétique de façon à ce que l'antenne devant être éliminée chaque fois soit celle pour laquelle une capacité de l'ensemble hypothétique d'antennes après élimination de cette antenne ait une valeur maximum, le sous-ensemble correspondant à l'ensemble hypothétique restant de $N$ antennes.

2. Récepteur (14) pour recevoir $N$ signaux, le récepteur (14) comprenant $\underline{N}$ antennes de réception (22) et $N$ chaînes de réception (26), $\underline{N}$ étant supérieur à $N$, le récepteur (14) comprenant en outre des moyens de couplage (24) pour coupler sélectivement les $N$ chaînes de réception (26) à un sous-ensemble de $N$ parmi les $\underline{N}$ antennes (22), les moyens de couplage (24) étant conçus pour sélectionner le sous-ensemble de $N$ antennes (22) en éliminant successivement ($\underline{N}$ - $N$), en partant d'un ensemble hypothétique de $\underline{N}$ antennes, fois une antenne de l'ensemble hypothétique de façon à ce que l'antenne devant être éliminée chaque fois soit celle pour laquelle la capacité de l'ensemble hypothétique d'antennes après élimination de cette antenne ait une valeur maximum, le sous-ensemble correspondant à l'ensemble hypothétique restant de $N$ antennes.

3. Emetteur (12) pour émettre $M$ signaux, l'émetteur (12) comprenant $\underline{M}$ antennes d'émission (16) et $M$ chaînes d'émission (20), $\underline{M}$ étant supérieur à $M$, l'émetteur (12) comprenant en outre des moyens de couplage (18) pour coupler sélectivement les $M$ chaînes d'émission (20) à un sous-ensemble de $M$ parmi les $\underline{M}$ antennes (16), les moyens de couplage (18) étant conçus pour sélectionner le sous-ensemble de $M$ antennes (16) en éliminant successivement ($\underline{M}$ - $M$) fois, en partant d'un ensemble hypothétique de $\underline{M}$ antennes, une antenne de l'ensemble hypothétique de façon à ce que l'antenne devant être éliminée chaque fois soit celle pour laquelle une capacité de l'ensemble hypothétique d'antenne après élimination de cette antenne ait une valeur maximum, le sous-ensemble correspondant à l'ensemble hypothétique restant de $M$ antennes.

4. Système de transmission (10) comprenant un récepteur (14) selon la revendication 2 et/ou un émetteur (12) selon la revendication 3.

5. Procédé de réception de $N$ signaux au moyen d'un récepteur (14) comprenant $\underline{N}$ antennes de réception (22) et $N$ chaînes de réception (26), $\underline{N}$ étant supérieur à $N$, le procédé comprenant :

- la sélection d'un sous-ensemble de $N$ parmi les $\underline{N}$ antennes (22) en éliminant successivement ($N$ - $N$) fois, en partant d'un ensemble hypothétique de $\underline{N}$ antennes, une antenne de l'ensemble hypothétique de telle façon à ce que l'antenne devant être éliminée chaque fois soit celle pour laquelle une capacité de l'ensemble hypothétique d'antennes après élimination de cette antenne ait une valeur maximum, **caractérisé en ce que** le sous-ensemble correspond à l'ensemble hypothétique restant de $N$ antennes,
- le couplage des $N$ chaînes de réception (26) au sous-ensemble de $N$ antennes (22).

6. Procédé d'émission de $M$ signaux au moyen d'un émetteur (12) comprenant $\underline{M}$ antennes d'émission (16) et $M$ chaînes d'émission (20), $\underline{M}$ étant supérieur à $M$, le procédé comprenant :

- la sélection d'un sous-ensemble de $M$ parmi les $\underline{M}$ antennes (16) en éliminant successivement ($M$ - $M$) fois, en partant d'un ensemble hypothétique de $\underline{M}$ antennes, une antenne de l'ensemble hypothétique de façon à ce que l'antenne devant être éliminée chaque fois soit celle pour laquelle une capacité de l'ensemble hypothétique d'antennes après élimination de cette antenne ait une valeur maximum, **caractérisé en ce que** le sous-ensemble correspond à l'ensemble hypothétique restant de $M$ antennes,
- le couplage des $M$ chaînes d'émission (20) au sous-ensemble de $M$ antennes (16).

FIG. 1

FIG. 2

FIG. 3

FIG. 4